# EUROPÄISCHE PATENTANMELDUNG

(11) **EP 2 952 080 A1**
(43) Veröffentlichungstag der Anmeldung: **09.12.2015**
(21) Anmeldenummer: 15158594.0
(22) Anmeldetag: 11.03.2015
(51) Int. Cl.: A01B 69/00, A01B 79/00

(54) **VERFAHREN ZUR BESTIMMUNG EINER HAUPTAUSRICHTUNG EINES LANDWIRTSCHAFTLICHEN FELDBEREICHS**

(30) Priorität: 06.06.2014 DE 102014108077
(71) Anmelder: CLAAS E-Systems KGaA mbH & Co KG, 33330 Gütersloh (DE)
(72) Erfinder: Meyer zu Helligen, Lars Peter, 32139 Spenge (DE); Röben, Frank, Dr., 33739 Bielefeld (DE); Sabelhaus, Dennis, 26892 Kluse (DE)
(74) Vertreter: Budach, Steffen

(57) **Zusammenfassung**

Die Erfindung betrifft ein Verfahren zur Bestimmung einer Hauptausrichtung (1) eines landwirtschaftlichen Feldbereichs (2a, b), wobei aus der Hauptausrichtung (1) und einer Streckenzugform (4a, b) zueinander im Wesentlichen parallele und durch den Feldbereich (2a, b) verlaufende Sollfahrspuren (5) zur Bearbeitung des Feldbereichs (2a, b) erzeugt werden. Das Verfahren ist dadurch gekennzeichnet, dass ausgehend von der Streckenzugform (4a, b) die Hauptausrichtung (1) basierend auf einer Optimierung eines Feldbearbeitungsaufwands bestimmt wird.

## Beschreibung

Die Erfindung betrifft ein Verfahren zur Bestimmung einer Hauptausrichtung eines landwirtschaftlichen Feldbereichs mit den Merkmalen des Oberbegriffs von Anspruch 1.

Die Bearbeitung eines landwirtschaftlichen Feldes oder eines Feldbereichs innerhalb eines solchen Feldes durch eine landwirtschaftliche Arbeitsmaschine, bzw. durch die Arbeitsgeräte der landwirtschaftlichen Arbeitsmaschine, erfolgt üblicherweise entlang von Sollfahrspuren, welche regelmäßig gerade und im Wesentlichen parallel zueinander durch den Feldbestand verlaufen. Die Sollfahrspuren enden regelmäßig an einem Vorgewende des Feldes, in welchem Vorgewende dann die Arbeitsmaschine von einer durch den Feldbestand führenden Sollfahrspur ggf. über eine Vorgewendefahrspur zur nächsten solchen abzufahrenden Sollfahrspur wendet. Zusammengehörige Sollfahrspuren in dem Feld oder in dem Feldbereich weisen entsprechend allesamt dieselbe Hauptausrichtung auf, welche auch als Einheitsvektor in Richtung der Sollfahrspuren gedacht werden kann.

Die Bestimmung der Hauptausrichtung und damit der Sollfahrspuren ist dabei für die wirtschaftliche Effizienz der Feldbearbeitung wichtig, da der Bearbeitungsaufwand des Feldes stark von der jeweiligen Hauptausrichtung abhängt. Einerseits werden durch die Hauptrichtung Anzahl und Länge der Sollfahrspuren im Feldbestand mitbestimmt. Andererseits ist auch bedeutsam, in was für einem Winkel die Sollfahrspuren auf eine Grenze zum Vorgewende oder auf eine Außenbegrenzung des Feldes treffen, da abhängig davon eine im Prinzip unerwünschte Doppelbearbeitung im Vorgewende auftreten kann.

Aus dem Stand der Technik und speziell aus der WO 2009/117014 A1, von welcher die vorliegende Erfindung ausgeht, ist es bekannt, basierend auf einer vorgebbaren solchen Hauptausrichtung die Sollfahrspuren sowie eine Vorgewendefläche für diese Sollfahrspuren in einem Feld automatisch zu bestimmen. Dieser Stand der Technik erlaubt es zwar somit, Sollfahrspuren und einen Vorschlag für das Vorgewende basierend auf einer vorgegebenen Hauptausrichtung zu erhalten, bietet aber keinen Hinweis für das Bestimmen der Hauptausrichtung selbst. Diese muss durch den Benutzer aufgrund seiner subjektiven Einschätzung des Feldes vorgegeben werden und kann dementsprechend unter wirtschaftlichen Gesichtspunkten von sehr unterschiedlicher Eignung sein.

Ausgehend von diesem Stand der Technik besteht die Aufgabe der Erfindung darin, ein Verfahren zur Bestimmung einer Hauptausrichtung eines landwirtschaftlichen Feldbereichs so weiterzuentwickeln und zu verbessern, dass eine Bearbeitung des Feldes entlang von Sollfahrspuren, die auf der bestimmten Hauptausrichtung basieren, wirtschaftlich möglichst effizient ist.

Das obige Problem wird bezogen auf ein Verfahren zur Bestimmung einer Hauptausrichtung eines landwirtschaftlichen Feldbereichs gemäß dem Oberbegriff von Anspruch 1 durch die Merkmale des kennzeichnenden Teils von Anspruch 1 gelöst.

Wesentlich für die Erfindung ist die Erkenntnis, dass die Hauptausrichtung so bestimmt werden kann, dass ein Feldbearbeitungsaufwand optimiert wird. Der Feldbearbeitungsaufwand kann dabei nach unterschiedlichen Kriterien definiert werden, wobei diese Kriterien sich - wie erfindungsgemäß erkannt wurde - bereits aus dem Feld selbst und den Sollfahrspuren sowie aus vorbekannten Parametern der landwirtschaftlichen Arbeitsmaschine jedenfalls in einer guten Näherung bestimmen lassen. Damit ist ein solcher Feldbearbeitungsaufwand einer quantitativen und insbesondere automatischen Bestimmung zugänglich, sodass durch einen entsprechenden Algorithmus die in diesem Sinne geeignetste Hauptausrichtung bestimmt bzw. berechnet werden kann. Auf diese Weise muss der Benutzer sich nicht mehr auf seine subjektive und u. U. nicht optimale Einschätzung der besten Hauptausrichtung verlassen, sondern kann diese automatisch und optimiert bestimmen lassen.

Die Sollfahrspuren bestimmen sich nach der Hauptausrichtung und der Streckenzugform, wobei diese einerseits - wie von Unteranspruch 2 beschrieben - gerade sein oder - wie von Unteranspruch 3 - auch durch eine Polylinie beschrieben werden kann. Hier und nachfolgend ist unter einer "Polylinie" eine Folge von zusammenhängenden Liniensegmenten und/oder Bogensegmenten zu verstehen, wobei die Bogensegmente einen jeweils unterschiedlichen Krümmungsradius aufweisen können. Soweit eine solche Polylinie nur Liniensegmente aufweist, handelt es sich also um einen Polygonzug. Ein geschlossener solcher Polygonzug bildet entsprechend ein Polygon. Das ist insbesondere dann vorteilhaft, wenn auch einer oder mehrere Abschnitte der Grenzkontur des Feldes z. B. einen konstanten Krümmungsradius aufweisen.

Entsprechend sehen die bevorzugten Ausgestaltungen der Unteransprüche 4 bis 6 auch vor, die Streckenzugform basierend auf einer solchen Grenzkontur des Feldbereichs bestimmen zu lassen.

Bei einer solchen Grenzkontur bzw. bei einem Abschnitt einer solchen Grenzkontur kann es sich sowohl um eine äußere Grenze eines Feldes als auch - wie von Unteranspruch 8 beschrieben - um eine Feldinnengrenze handeln. Dies ist etwa dann der Fall, wenn ein Feld in mehrere Unterfeldbereiche unterteilt wurde, für die jeweils unabhängig voneinander die Hauptausrichtung bestimmt werden soll.

Der Feldbearbeitungsaufwand, hinsichtlich dessen vorschlagsgemäß optimiert werden soll, kann dabei gemäß der Ausgestaltung des Unteranspruchs 9 auf mehreren Aufwandsgrößen basieren, welche zudem noch untereinander gewichtet werden können.

Die Unteransprüche 10 und 11 beschreiben dabei speziell eine Gesamtbearbeitungslänge, und zwar speziell im Sinne einer Gesamtlänge der Sollfahrspuren. Dabei wird eine möglichst kleine Gesamtbearbeitungslänge angestrebt.

Die bevorzugte Ausgestaltung des Unteranspruchs 12 betrifft dabei die Gesamtbearbeitungszeit als Aufwandsgröße, welche bevorzugt ebenfalls möglichst klein ist. Diese Gesamtbearbeitungszeit ist nicht einfach nur proportional zu der Gesamtbearbeitungslänge, da z. B. jedes Einfahren in das Vorgewende und Wenden zusätzlich Zeit kostet.

Schließlich sehen die Unteransprüche 14 und 15 eine Doppelbearbeitungsfläche als zu minimierende Aufwandsgröße vor. Eine solche Doppelbearbeitung kann daher herrühren, dass einerseits das Vorgewende regelmäßig in einem umlaufenden Arbeitsgang zumindest einmal von der Arbeitsmaschine bearbeitet wird. Wenn nun die Arbeitsmaschine in einem vom Lot abweichenden Winkel den Feldbestand verlässt und das Vorgewende betritt, dann bearbeiten die Arbeitsgeräte der Arbeitsmaschine zumindest auf einem Teil ihrer Arbeitsbreite das Vorgewende, welches dadurch auf einer bestimmten Fläche doppelt bearbeitet wird, da auf der übrigen Arbeitsbreite die Arbeitsgeräte noch den Feldbestand bearbeiten sollen. Der sinngemäß gleiche Effekt tritt ein, wenn die Arbeitsmaschine in dem vom Lot abweichenden Winkel aus dem Vorgewende den Feldbestand betritt. Auch eine solche Doppelbearbeitung und speziell die Größe der doppelt bearbeiteten Fläche soll nach Möglichkeit minimiert werden. Durch die obige Gewichtung der Aufwandsgrößen kann dabei ausgewählt werden, welche von ihnen stärker oder weniger stark berücksichtigt werden soll.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1a): eine schematische Ansicht eines landwirtschaftlichen Feldes mit Sollfahrspuren gemäß einer horizontalen Hauptausrichtung,
- Fig. 1b): eine schematische Ansicht des Feldes der Fig. 1a mit Sollfahrspuren gemäß einer vertikalen Hauptausrichtung,
- Fig. 1c): eine schematische Ansicht des Feldes der Fig. 1a mit Sollfahrspuren gemäß einer diagonalen Hauptausrichtung,
- Fig. 1d): eine schematische Ansicht des Feldes der Fig. 1a mit Sollfahrspuren gemäß einer weiteren diagonalen Hauptausrichtung und
- Fig. 2): eine schematische Ansicht eines weiteren landwirtschaftlichen Feldes mit verschiedenen Streckenzugformen für die Sollfahrspuren.

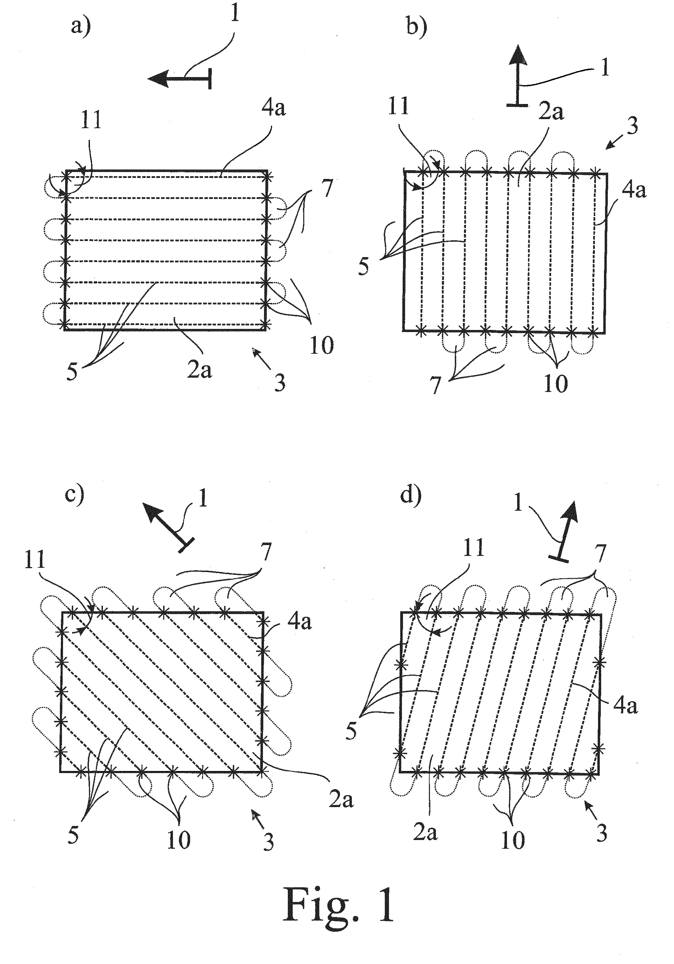

Das vorschlagsgemäße Verfahren dient der Bestimmung einer Hauptausrichtung 1 eines landwirtschaftlichen Feldbereichs 2a, b. Ein solcher Feldbereich 2a, b kann dabei entweder ein ganzes Feld 3 sein, welches also von einem Nichtfeldbereich begrenzt wird, oder ein Teilbereich eines Feldes 3 sein, welches zumindest teilweise von einem anderen Feldbereich begrenzt wird. Der Feldbereich 2a, b kann dabei bevorzugt auch denjenigen Teil des Feldes 3 umfassen, in dem ein Vorgewende vorgesehen sein kann. Alternativ kann der Feldbereich 2a, b auch-wie in dem Beispiel der Fig. 1a-d - von einem bereits definierten, hier aber nicht gezeigten Vorgewendebereich begrenzt sein. Eine Hauptausrichtung 1 im vorliegenden Sinne stellt eine Richtung in der Ebene des Feldbereichs 2a, b dar, sodass jeder Hauptausrichtung 1 ein Richtungsvektor entsprechend einem Einheitsvektor in der Ebene zugeordnet werden kann.

Aus dieser Hauptausrichtung 1 und einer Streckenzugform 4a, b, auf die untenstehend noch näher eingegangen wird, werden vorschlagsgemäß zueinander im Wesentlichen parallele und durch den Feldbereich 2a, b verlaufende Sollfahrspuren 5 zur Bearbeitung des Feldbereichs 2a, b erzeugt. Diese Bearbeitung findet dadurch statt, dass die Sollfahrspuren 5 von einer - hier nicht dargestellten - landwirtschaftlichen Arbeitsmaschine mit einem Arbeitsgerät abgefahren werden. Der Abstand der im Wesentlichen parallelen Sollfahrspuren 5 entspricht dabei vorzugsweise einer Arbeitsbreite 6 dieses Arbeitsgeräts.

Das vorschlagsgemäße Verfahren ist nun dadurch gekennzeichnet, dass ausgehend von der Streckenzugform 4a, b die Hauptausrichtung 1 basierend auf einer Optimierung eines Feldbearbeitungsaufwands bestimmt wird. Bevor also die Hauptausrichtung 1 bestimmt wird, ist die Streckenzugform 4a, b bekannt, wobei diese entweder fest vorgegeben, von einem Benutzer vorgegeben oder in einem Vorverarbeitungsschritt - wie untenstehend noch näher beschrieben - erst noch ermittelt wird. Für diese Streckenzugform 4a, b können dann etwa verschiedene Möglichkeiten der Hauptausrichtung 1 angesetzt werden, wobei eine "Rundumabdeckung" mit einer bestimmten Winkelgranularität erreicht werden kann. Aus der Streckenzugform 4a, b, der Hauptausrichtung 1 und der Arbeitsbreite 6 ergeben sich dann die Sollfahrspuren 5, aus welchen dann ggf. mit bekannten Parametern der Arbeitsmaschine bzw. des Arbeitsgeräts ein Feldbearbeitungsaufwand bestimmt werden kann. Unter allen Hauptausrichtungen 1, für welche dieser Feldbearbeitungsaufwand bestimmt wird, kann dann diejenige Hauptausrichtung 1 ausgewählt werden, bei der der Feldbearbeitungsaufwand minimiert wird. Neben einem solchen numerischen Ansatz kann prinzipiell die bevorzugte Hauptausrichtung 1 auch nach einem analytischen Verfahren zur Optimierung des Feldbearbeitungsaufwands bestimmt werden. Vorzugsweise wird bei dieser Optimierung die Arbeitsbreite 6 als fest angesetzt. Prinzipiell ließe sich die Optimierung auch für unterschiedliche Arbeitsbreiten 6 durchführen.

In den Fig. 1a-d sind vier verschiedene Hauptausrichtungen 1 mit den entsprechenden Sollfahrspuren 5 für denselben Feldbereich 2a dargestellt. Daneben sind noch Vorgewendespuren 7 dargestellt, welche von der landwirtschaftlichen Arbeitsmaschine z. B. bei einem Übergang von einer Sollfahrspur 5 zu nächsten Sollfahrspur 5 abgefahren werden.

Gemäß einer ersten bevorzugten Variante ist die Streckenzugform 4a eine gerade Strecke. In diesem Fall sind entsprechend auch die Sollfahrspuren 5 gerade. Dies entspricht den Sollfahrspuren 5 der Fig. 1a-d.

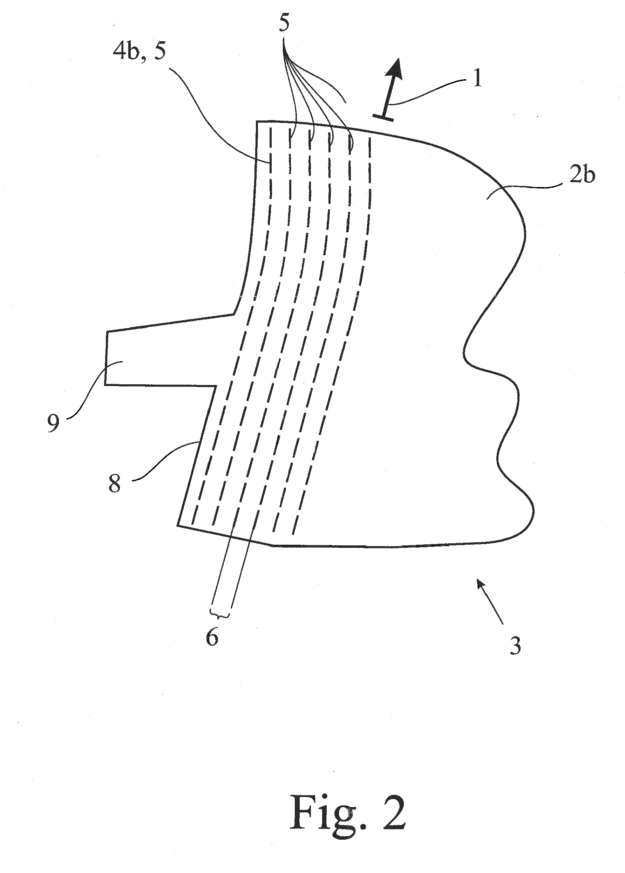

Alternativ kann die Streckenzugform 4b auch eine Polylinie im obigen Sinne sein. Dieser ist in der Fig. 2 dargestellt. Eine solche Polylinie kann auch gerade Abschnitte aufweisen. Die entsprechenden Sollfahrspuren 5 entsprechen dann entweder der Polylinie insgesamt - wie in der Fig. 2 dargestellt - oder entstehen aus einer Verlängerung oder Aneinanderreihung der Streckenzugform 4b in der Hauptausrichtung 1. Die Hauptausrichtung 1 kann für einen solchen Fall und wie in der Fig. 2 dargestellt etwa der Hauptausrichtung 1 des längsten geraden Abschnitts der Polylinie entsprechen. Speziell bei einer solchen Polylinie als Streckenform 4b kommt es in Betracht, den Feldbereich 2a, b als Teilbereich eines Feldes 3 anzusetzen. Ferner kommt es in Betracht, bei einer solchen Polylinie zur Erzeugung einer runden Sollfahrspur 5 eine Krümmung an den Winkeln der Polylinie vorzunehmen.

Bevorzugt ist weiter, dass die Streckenzugform 4a, b basierend auf einer Grenzkontur 8 des Feldbereichs 2a, b bestimmt wird. Anschaulich geht aus der Fig. 2 hervor, dass die Grenzkontur 8 hier nicht gerade ist, sondern der Polylinie der Streckenzugform 4b angenähert ähnelt, weswegen sich dieser hier eher als eine gerade Strecke als Streckenzugform 4b anbietet.

Hier ist es nicht erforderlich, dass die Streckenzugform 4a, b der Grenzkontur 8 genau entsprechen muss, insbesondere wenn die Grenzkontur 8 sehr unregelmäßig ist oder eine Ausbuchtung 9 aufweist wie in der Fig. 2 dargestellt. Eine solche Unregelmäßigkeit wie diese Ausbuchtung 9 kann für die Bestimmung der Streckenzugform 4a, b außer Betracht bleiben, wenn wie bevorzugt die Streckenzugform 4a, b basierend auf einer Glättung und/oder einer Vereinfachung der Grenzkontur 8 bestimmt wird.

Dabei kann die Streckenzugform 4a, b auch durch eine - z. B. numerische - Approximation der Grenzkontur 8 des Feldbereichs 2a, b bestimmt werden. Es kann also eine parametrisierbare Streckenzugform 4a, b gewählt werden und diese Parameter können so variiert werden, dass ein bestimmtes Fehlermaß in Bezug auf die Grenzkontur 8 minimiert wird. Vorzugsweise geschieht dies durch eine Approximation basierend auf einer Polylinie oder durch eine Approximation basierend auf einer geraden Strecke.

Weiter ist bevorzugt, dass der Feldbereich 2a, b zumindest teilweise - insbesondere vollständig - von einer Feldaußengrenze und/oder von einem Vorgewendebereich begrenzt wird. Im Fall der vollständigen solchen Begrenzung entspricht der Feldbereich 2a, b einem vollständigen Feld 3, ggf. abzüglich des Vorgewendes.

Es ist aber auch bevorzugt, dass der Feldbereich 2a, b zumindest teilweise von einer Feldinnengrenze begrenzt wird. In diesem Fall stellt der Feldbereich 2a, b nur einen Teilbereich eines größeren Feldes 3 dar.

Hinsichtlich der Optimierung des Feldbearbeitungsaufwands ist bevorzugt, dass dieser auf einer Vielzahl von, vorzugsweise gewichteten, Aufwandsgrößen basiert. Eine solche Gewichtung kann dabei angeben, in welchem relativen Maße diese Aufwandsgrößen in die Gesamtbetrachtung - also in den Feldbearbeitungsaufwand - einfließen.

Es kann sein, dass eine der Aufwandsgrößen eine Gesamtbearbeitungslänge ist, welche auf einer Summe der Länge der Sollfahrspuren 5 basiert. Wahlweise können auch die Vorgewendespuren 7 bzw. deren jeweilige Länge in die Gesamtbearbeitungslänge teilweise oder vollständig einfließen. So ist beispielsweise die Länge der Sollfahrspuren 5 im Feldbereich 2a für die jeweilige Hauptausrichtung 1 gemäß den Fig. 1a, b kleiner als für die jeweilige Hauptausrichtung 1 gemäß den Fig. 1c, d.

Der Feldbereich 2a, b kann auch - gemäß einer hier nicht dargestellten Variante - so angesetzt werden, dass es ein erst später zu definierendes Vorgewende umfasst, sodass also der Feldbereich 2a, b bis zu der Feldaußengrenze des Feldes 3 reicht. In diesem Fall werden die Sollfahrspuren 5 im Nachhinein entsprechend der Ausdehnung eines solchen Vorgewendes im Feldbereich 2a, b gekürzt. Daher kann bei der Bestimmung der Gesamtbearbeitungslänge gelten, dass für die Berechnung der Gesamtbearbeitungslänge eine Verkürzung der Sollfahrspuren 5 aufgrund eines Vorgewendebereichs berücksichtigt wird. Speziell können die Sollfahrspuren 5 zumindest teilweise um ihren jeweiligen Verlauf im Vorgewendebereich verkürzt werden. Bevorzugt gilt hier also, dass der Vorgewendebereich zumindest teilweise im Feldbereich 2a, b liegt.

Auch ist es möglich, dass eine der obigen Aufwandsgrößen eine Gesamtbearbeitungszeit ist. Die Gesamtbearbeitungszeit bezeichnet diejenige Zeit, welche von der Arbeitsmaschine für eine Bearbeitung des Feldbereichs 2a, b durch ein Abfahren der Sollfahrspuren 5 und der Vorgewendespuren 7 benötigt wird. Diese Gesamtbearbeitungszeit hängt z. B. von den Leistungsdaten der Arbeitsmaschine bzw. ihres Arbeitsgeräts und der Bestandsdichte auf dem Feldbereich 2a, b ab, wodurch etwa eine jeweils mögliche Fahrgeschwindigkeit der Arbeitsmaschine bestimmt werden kann. Bevorzugt ist weiter, dass die Gesamtbearbeitungszeit auf einer Summe der Länge der Sollfahrspuren 5 basiert. Dies ergibt sich aus der Überlegung, dass die Zeit zum Abfahren einer Sollfahrspur 5 zunächst von der Länge der Sollfahrspur 5 abhängig ist. Alternativ oder zusätzlich kann die Gesamtbearbeitungszeit auch auf einer Summe der Länge von Vorgewendespuren 7 basieren. Hier ist zu beachten, dass regelmäßig eine Vorgewendespur 7 durch ihre Krümmung nicht so schnell befahren werden, kann wie eine in der Regel weniger gekrümmte Sollfahrspur 5. Ein- und Ausschaltvorgänge der Arbeitsgeräte im Vorgewende können ebenfalls eine Verzögerung und damit eine längere Gesamtbearbeitungszeit bewirken.

Alternativ oder zusätzlich kann die Gesamtbearbeitungszeit auch auf einer Anzahl von jeweiligen Schnittpunkten 10 der Sollfahrspuren 5 mit der Grenzkontur 8 basieren. Eine Auswahl dieser Schnittpunkte 10 ist in den Fig. 1a-d gekennzeichnet. Näherungsweise wird an jedem solchen Schnittpunkt 10 bzw. an zugeordneten Paaren von solchen Schnittpunkten 10 ein Wendevorgang im Vorgewende von einer Sollfahrspur 5 zur nächsten Sollfahrspur 5 ausgeführt. Für einen solchen Wendevorgang kann näherungsweise auch eine konstante Wendezeit - unabhängig von der genauen Länge der betreffenden Vorgewendespur 7 - oder ein konstanter Wendezeitbeitrag veranschlagt werden. Da etwa die Sollfahrspuren 5 der Fig. 1c gemäß ihrer Hauptausrichtung 1 zu einer größeren Zahl solcher Schnittpunkte 10 führen als die Sollfahrspuren 5 der Fig. 1a gemäß ihrer Hauptausrichtung 1, ist für die Variante der Fig. 1c auch der Beitrag der Wendezeit zu der Gesamtbearbeitungszeit größer.

Bevorzugt ist weiter, dass eine der Aufwandsgrößen eine Doppelbearbeitungsflächengröße ist. Damit ist die Größe derjenigen Fläche insbesondere im Vorgewende gemeint, welche - wie oben beschrieben - wegen der Arbeitsbreite der Arbeitsgeräte beim Übergang zwischen dem Feldbestand und dem Vorgewende doppelt bearbeitet wird. Es kann diese Doppelbearbeitungsflächengröße eine Funktion der jeweiligen Schnittwinkel 11 der Sollfahrspuren 5 mit der Grenzkontur 8 sein. Mit anderen Worten trägt jeder einzelne Schnittpunkt 10 der Sollfahrspur 5 mit der Grenzkontur 8 oder - falls das Vorgewende innerhalb des Feldbereichs 2a, b ist - mit der entsprechenden Begrenzung des Vorgewendes potenziell zu der Doppelbearbeitungsflächengröße bei, wobei dieser Beitrag von dem Schnittwinkel 11 des jeweiligen Schnittpunkts 10 abhängig ist.

Dieser Zusammenhang kann insbesondere darin bestehen, dass der Beitrag eines jeweiligen Schnittwinkels 11 zur Doppelbearbeitungsfläche proportional zur Abweichung des jeweiligen Schnittwinkels 11 vom Lot ist. Das bedeutet einfach, dass ein Schnittwinkel 11 mit einer geringeren Abweichung vom Lot weniger zu dieser Doppelbearbeitungsfläche beiträgt als ein Schnittwinkel 11 mit einer größeren Abweichung vom Lot. Insbesondere kann es bei einem Schnittwinkel 11 im Lot sein, dass überhaupt keine Doppelbearbeitung stattfindet und daher auch keine Doppelbearbeitungsfläche entsteht. In erster Näherung kann z. B. ein linearer Zusammenhang zwischen der Abweichung des jeweiligen Schnittwinkels 11 vom Lot und dem entstehenden Beitrag zur Doppelbearbeitungsfläche angesetzt werden.

Da der Schnittwinkel 11 für die jeweilige Hauptausrichtung 1 der Fig. 1a, b dem Lot entspricht, tritt für diese beiden Varianten nicht zwingend überhaupt eine wesentliche Doppelbearbeitungsfläche auf. Da weiter die Abweichung der Schnittwinkel 11 vom Lot für die Hauptausrichtung 1 der Fig. 1c größer ist als für diejenige des Schnittwinkels 11 für die Hauptausrichtung 1 der Fig. 1d, ist auch der Beitrag zur Doppelbearbeitungsfläche in der Variante der Fig. 1d jedes solchen Schnittpunkts 10 größer.

Das Bestimmen der Sollfahrspuren 5 und ggf. der Vorgewendespuren 7 gibt aber nicht unbedingt eine Auskunft darüber, in welcher Reihenfolge die Sollfahrspuren 5 und ggf. die Vorgewendespuren 7 von der landwirtschaftlichen Arbeitsmaschine abgefahren werden sollen. Insbesondere kann diese Information genau dann fehlen, wenn eine gleichzeitige Bearbeitung des Feldbereichs 2a, b durch mehrere Arbeitsmaschinen erfolgen soll. Es können auch weitere Randbedingungen vorliegen, welche eine jeweils unterschiedliche vorteilhafte Gesamtroute begründen können. Daher ist es bevorzugt, dass basierend auf den Sollfahrspuren 5 eine Routenplanung für mindestens eine landwirtschaftliche Arbeitsmaschine durchgeführt wird. Eine solche Routenplanung kann dabei ebenfalls auf der Optimierung eines oder mehrerer Güteparameter beruhen.

### Bezugszeichenliste

- 1: Hauptausrichtung
- 2 a, b: Feldbereich
- 3: Feld
- 4 a, b: Streckenzugform
- 5: Sollfahrspur
- 6: Arbeitsbreite
- 7: Vorgewendespur
- 8: Grenzkontur
- 9: Ausbuchtung
- 10: Schnittpunkt
- 11: Schnittwinkel

## Patentansprüche

1. Verfahren zur Bestimmung einer Hauptausrichtung (1) eines landwirtschaftlichen Feldbereichs (2a, b), wobei aus der Hauptausrichtung (1) und einer Streckenzugform (4a, b) zueinander im Wesentlichen parallele und durch den Feldbereich (2a, b) verlaufende Sollfahrspuren (5) zur Bearbeitung des Feldbereichs (2a, b) erzeugt werden,
**dadurch gekennzeichnet,**
**dass** ausgehend von der Streckenzugform (4a, b) die Hauptausrichtung (1) basierend auf einer Optimierung eines Feldbearbeitungsaufwands bestimmt wird.

2. Verfahren nach Anspruch 1, **dadurch gekennzeichnet, dass** die Streckenzugform (4a) eine gerade Strecke ist.

3. Verfahren nach Anspruch 1, **dadurch gekennzeichnet, dass** die Streckenzugform (4b) eine Polylinie ist.

4. Verfahren nach einem der Ansprüche 1 bis 3, **dadurch gekennzeichnet, dass** die Streckenzugform (4a, b) basierend auf einer Grenzkontur (8) des Feldbereichs (2a, b) bestimmt wird.

5. Verfahren nach Anspruch 4, **dadurch gekennzeichnet, dass** die Streckenzugform (4a, b) basierend auf einer Glättung und/oder einer Vereinfachung der Grenzkontur (8) bestimmt wird.

6. Verfahren nach Anspruch 4 oder 5, **dadurch gekennzeichnet, dass** die Streckenzugform (4a, b) durch eine Approximation der Grenzkontur (8) bestimmt wird, vorzugsweise durch eine Approximation basierend auf einem winkligen Polygonzug oder durch eine Approximation basierend auf einer geraden Strecke.

7. Verfahren nach einem der Ansprüche 1 bis 6, **dadurch gekennzeichnet, dass** der Feldbereich (2a, b) zumindest teilweise von einer Feldaußengrenze und/oder von einem Vorgewendebereich begrenzt wird.

8. Verfahren nach einem der Ansprüche 1 bis 7, **dadurch gekennzeichnet, dass** der Feldbereich (2a, b) zumindest teilweise von einer Feldinnengrenze begrenzt wird.

9. Verfahren nach einem der Ansprüche 1 bis 8, **dadurch gekennzeichnet, dass** der Feldbearbeitungsaufwand auf einer Vielzahl von, vorzugsweise gewichteten, Aufwandsgrößen basiert.

10. Verfahren nach Anspruch 9, **dadurch gekennzeichnet, dass** eine der Aufwandsgrößen eine Gesamtbearbeitungslänge ist, welche auf einer Summe der Länge der Sollfahrspuren (5) basiert.

11. Verfahren nach Anspruch 10, **dadurch gekennzeichnet, dass** für die Berechnung der Gesamtbearbeitungslänge eine Verkürzung der Sollfahrspuren (5) aufgrund eines Vorgewendebereichs berücksichtigt wird, vorzugsweise, dass die Sollfahrspuren (5) zumindest teilweise um ihren jeweiligen Verlauf im Vorgewendebereich verkürzt werden, insbesondere, dass der Vorgewendebereich zumindest teilweise im Feldbereich (2a, b) liegt.

12. Verfahren nach einem der Ansprüche 9 bis 11, **dadurch gekennzeichnet, dass** eine der Aufwandsgrößen eine Gesamtbearbeitungszeit ist, welche Gesamtbearbeitungszeit auf einer Summe der Länge der Sollfahrspuren (5) und/oder auf eine Summe der Länge von Vorgewendespuren (7) und/oder auf einer Anzahl von jeweiligen Schnittpunkten (10) der Sollfahrspuren (5) mit der Grenzkontur (8) basiert.

13. Verfahren nach einem der Ansprüche 9 bis 12, **dadurch gekennzeichnet, dass** eine der Aufwandsgrößen eine Doppelbearbeitungsflächengröße ist, vorzugsweise, welche Doppelbearbeitungsflächengröße eine Funktion der jeweiligen Schnittwinkel (11) der Sollfahrspuren (5) mit der Grenzkontur (8) ist.

14. Verfahren nach Anspruch 13, **dadurch gekennzeichnet, dass** der Beitrag eines jeweiligen Schnittwinkels (11) zur Doppelbearbeitungsfläche proportional zur Abweichung des jeweiligen Schnittwinkels (11) vom Lot ist.

15. Verfahren nach einem der Ansprüche 1 bis 14, **dadurch gekennzeichnet, dass** basierend auf den Sollfahrspuren (5) eine Routenplanung für mindestens eine landwirtschaftliche Arbeitsmaschine durchgeführt wird.
